# EUROPEAN PATENT APPLICATION

(11) **EP 4 020 253 A1**
(43) Date of publication of application: **29.06.2022**
(21) Application number: 21209193.8
(22) Date of filing: 19.11.2021
(51) Int. Cl.: G06F 16/25

(54) **A DATA MODEL CREATION METHOD AND TERMINAL THEREOF**

(30) Priority: 23.12.2020 CN 202011539439
(71) Applicant: Xiamen Meiya Pico Information Co., Ltd, Xiamen, Fujian 361000 (CN)
(72) Inventor: Chen, Lou, Xiamen (CN); Yehui, An, Xiamen (CN); Fengnian, Wang, Xiamen (CN); Lei, Zhang, Xiamen (CN); Xinsheng, Du, Xiamen (CN)
(74) Representative: Petraz, Gilberto Luigi

(57) **Abstract**

Disclosed are a method and terminal of data model creation, which comprise receiving multiple types of data source for creating a data model, generating the corresponding wide table according to the data source and its type; generating a corresponding data model according to the wide table; processing the received multiple data sources in a configuration manner corresponding to the data sources, and generating the processed data sources into a corresponding wide table, generating a corresponding data model that needs to be displayed through the generated wide table. When the business changes, the business display can be updated by modifying the wide table of the data model. Interface reconfiguration and secondary development are not required for the update, which improves the large screen user experience.

## Description

### Cross Reference to Related Applications

This application claims the priority of the Chinese patent application CN202011539439.3, filed on Dec. 23, 2020. The contents of this Chinese patent application are all hereby incorporated by reference.

### FIELD

The present application relates to the field of data visualization technology, particularly to a data model creation method and terminal thereof.

### BACKGROUND

With the continuous development of modern information technology, data visualization has constantly come into view. Various visualization platforms are constantly emerging. For example, the Taobao's Double Eleven large data visualization screen brings people a different data presentation mode. However, the large visualization screen presentation relies on the support of data, hence, an efficient, fast, and unified data interface for various charts on a large visualization screen came into being. Creating a data model is a method of data organization and storage, which emphasizes reasonable storage of data from the perspective of business, data access, and use. Multiple data sources are layered in accordance with established rules using database layering technology to make the application of data on a large visualization screen more efficient and convenient.

In practice, a data model should not only adapt to the dominant data sources format, but also simplify the process of creating a data model and improve the working efficiency. However, the data source format that supported by the current large visualization screen is relatively confined and not universal enough. Moreover, the creation process is difficult to some extent, which requires skilled artisans to operate. During the creation process, most of the chart data for a large visualization screen comes from API interfaces, and each chart corresponds to an API data interface. This results in repeated calling of the interfaces and huge waste of browser resources, and affects the loading time of a large screen page, so that data required by the charts cannot be adjusted in time according to the business demand.

### SUMMARY

The technical problem to be solved by the present application is to provide a creation method and terminal for a data model, which can avoid interface reconfiguration and improve the experience of using a large screen.

In order to solve the above technical problem, a technical solution adopted by the present application is:
A creation method for a data model, comprising steps of:
receiving multiple types of data source for data model creation, the data source comprising multiple types;
generating a corresponding wide table according to the data source and its corresponding type;
generating a corresponding data model according to the wide table.

In order to solve the above technical problem, another technical solution adopted by the present application is:
A creation terminal for a data model, comprising a memory, a processor, and a computer program that is stored in the memory and can be run on the processor, with the steps in the creation method for a data model described above implemented when the computer program is executed by the processor.

The beneficial effects of the present application lie in that: the received multiple data sources are processed with corresponding configuration method, the processed data sources are generated into a corresponding wide table, and the generated wide table is used to generate a corresponding data model to be displayed; when the business changes, by modifying the wide table of the data model, the business display can be updated without interface reconfiguration and secondary development, which improves the experience of using a large screen.

### BRIEF DESCRIPTION OF THE DRAWINGS

FIG. 1 is a flow chart of a creation method for a data model according to an embodiment of the present application;
FIG. 2 is another flow chart of a creation method for a data model according to an embodiment of the present application;
FIG. 3 is another flow chart of a creation method for a data model according to an embodiment of the present application;
FIG. 4 is a schematic view illustrating a creation method for a data model according to an embodiment of the present application;
FIG. 5 is a schematic view illustrating a wide table of a creation method for a data model according to an embodiment of the present application;
FIG. 6 is a schematic view illustrating another creation method for a data model according to an embodiment of the present application;
FIG. 7 is a schematic view illustrating creation of relationships between tables in a creation method for a data model according to an embodiment of the present application;
FIG. 8 is another flow chart of a creation method for a data model according to an embodiment of the present application;
Fig. 9 is a schematic structural view of a creation terminal for a data model according to an embodiment of the present application.

### DETAILED DESCRIPTION

In the following detailed description, embodiments and the accompanying drawings are provided to set forth the technical contents, objectives and effects achieved by the present application.

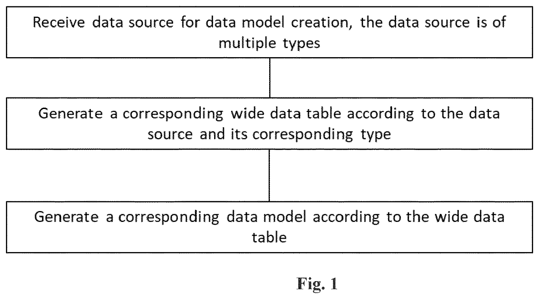

Referring to FIG. 1, an embodiment of the present application provides a creation method for a data model, comprising the following steps:
receiving a data source for creating a data model, the data source comprising multiple types;
generating a corresponding wide table according to the data source and its corresponding type;
generating a corresponding data model according to the wide table.

It can be seen from the above description that the beneficial effects of the present application lie in that: multiple data sources received are processed in a configuration manner corresponding to the data sources, the processed data sources are generated into a corresponding wide table, and the generated wide table is used to generate a corresponding data model that needs to be displayed; when the business changes, the business display can be updated by modifying the wide table of the data model. There is no need for interface reconfiguration and secondary development, which improves the experience of using a large screen.

Further, said generating a corresponding wide table according to the data source and its corresponding type comprises:
receiving a request of data model creation;
determining the data source of a data model to be created and its corresponding type;
generating the corresponding wide table in a corresponding manner according to the type, and the manner comprises a graphical manner or a SQL statement manner.

It can be seen from the above description that, by determining the data source of the data model to be created and its corresponding type, and generating a corresponding wide table in a graphical manner or an SQL statement manner, the requirements of ordinary users and professional users for data model creation are satisfied. Not much professional knowledge is required when creating a model. It is more universal since even one who does not master SQL syntax can create the model with graphics visualization method.

Further, said generating a corresponding wide table in a corresponding manner according to the type comprises:
determining whether the type is a database type, and if so, generating a corresponding wide table in a graphical manner or an SQL statement manner; otherwise, generating a corresponding wide table in a graphical manner.

It can be seen from the above description that, generating a corresponding wide table in a graphical manner or an SQL statement manner for database type data enables not only ordinary users to create a data model for the database in a graphical manner, but also professional users to create a data model for the database in a SQL statement manner, which meets the requirements of different users.

Further, said generating a corresponding wide table in a SQL statement manner comprises:
loading the corresponding database driver of the database-type data source;
linking to a database where the data source is located through the address saved in the database driver, and acquiring a data table in which the source data is located in the database;
generating a corresponding wide table according to an SQL statement and the data table where the data source is located;
determining whether the wide table is successfully generated, and if so, saving the SQL statement.

It can be seen from the above description that, generating a corresponding wide table through the SQL statement enables professional users to generate a data model efficiently by technical means in the field, thereby meeting the requirements of professional users for data model generation.

Further, said generating a corresponding wide table in a graphical manner comprises:
receiving a drag operation instruction, moving the data source of the data model to be created to a wide table creation region, and generating a corresponding data source table;
generating an inter-table data relationship interface in the wide table creation region, and receiving an association relationship supported by the data table set via the inter-table data relationship interface and a correspondence relationship of fields between data tables;
generating a corresponding wide table according to the data source table, the association relationship and the correspondence relationship.

It can be seen from the above description that, ordinary users can create a data model by dragging the data source to be created through graphical operations, and users are allowed to select associations between tables by generating a graphical inter-table data relationship interface, which greatly lower the threshold for creating a data model, and enables ordinary users who do not have database expertise to realize data model generation through graphical operations, thereby meeting the requirements of ordinary users for data model generation.

Further, it further comprises steps of:
receiving a business modification request, the business modification request comprises a data model identifier to be modified;
updating a corresponding wide table according to the data model identifier,
generating a modified data model according to an updated wide table.

It can be seen from the above description that when the business needs to change, the correspondent wide table data is updated, and a data model is generated thereby. With this method, a data model is free from the reconfiguration of interface information or secondary development of a data model due to data changes, which greatly improves the adaptability of the data model to the business.

Further, the business modification request further comprises a business type modification, the business type modification comprising field editing and calculation attribute adding;
said updating a wide table comprises:
if the modification is field editing, saving an edited field in the wide table, refreshing the wide table and saving;
if the modification is calculation attribute adding, adding the calculation attribute to the wide table, refreshing the wide table and saving.

It can be seen from the above description that the data model supports field modification and new calculation field creation. Allowing the modification of wide table, the data model can meet diversified demands, which is easier to use.

Further, said receiving a data source for creating a data model comprises:
receiving a data source creation request, the data source creation request comprises the type of data source;
receiving and generating a corresponding data source for creating a data model according to the type of data source.

It can be seen from the above description that by receiving the type of the data source and generating a corresponding data source for creating the data model, the subsequent operation of creating the data source of the data model to be created is facilitated.

Further, the type of the data source to be created comprises an excel or csv data source, an API data source, or a database data source;
said receiving and generating a corresponding data source for creating a data model according to the type of a data source to be created comprises:
if the type of a data source to be created is an excel or csv data source,
parsing an imported excel or csv file and generating a data source for creating a data model;
if the type of a data source to be created is an API data source,
acquiring a URL address of an interface of the API data source and a requesting mode;
acquiring data from a corresponding interface according to the URL address and the requesting mode, and generating a data source for creating a data model;
if the type of a data source to be created is a database data source,
acquiring a corresponding server IP, port, user name and password according to a type of a to-be-acquired database;
acquiring an authority of the database according to the user's name and password, and driving connection to the to-be-acquired database to via the server IP and port through a corresponding database;
acquiring data from the to-be-acquired database and generating a data source for creating a data model.

It can be seen from the above description that different data types are processed using a configuration that supports the imports of multiple data sources to generate corresponding data sources, which meet different business requirements and improve the configurability of the created data model.

Another embodiment of the present application provides a creation terminal for a data model, comprising a memory, a processor, and a computer program that is stored in the memory and can be run on the processor. The steps in the above creation method for a data model are implemented when the computer program is executed by the processor.

### First Embodiment

Referring to FIG. 1, a creation method for a data model comprises steps of:
receiving a data source for creating a data model, the data source comprising multiple types;
generating a corresponding wide table according to the data source and its corresponding type;
generating a corresponding data model according to the wide table.

Said receiving a data source for creating a data model comprises:
receiving a request of data source creation, the request comprises the type of data source to be created.

The type of data source to be created comprises an excel or csv data source, an API data source or database data source, specifically including eight different data formats: excel, csv, MySQL, MariaDB, Oricle, PostgreSQL, SQLServer and API.

Receiving and generating a corresponding data source for creating a data model according to the type of data source to be created comprises:
if the data source to be created is an excel or csv data source, parsing the imported excel or csv file and generating a data source for creating a data model;
the file upload-supported here conforms to a certain format, which is: the first row of the uploaded file is the header, the remaining rows are data rows, and the data rows are in one-to-one correspondence with the header;
and it supports uploading of a single file or multiple files, a data source is generated and stored in a databased following each upload, during uploading, file data is first parsed and then stored in a cache, and the parsed files can be previewed; after the instruction that the number of files and data are complete is received, the uploaded files are saved into the database; if the data is not saved, the data in the cache will be cleared to avoid data redundancy;
if the data source to be created is an API data source, acquiring a URL address of an interface of the API data source and a requesting mode (POST, GET, DELETE, PUT or PATCH); acquiring data from a corresponding interface according to the URL address and the requesting mode and generating a data source for creating a data model; if request parameters and request headers is required during the request process, sending a connection request after corresponding request parameters and request headers are identified; if calling of an API interface fails, sending a prompt message; if the calling successes, saving the acquired data into the database and saving connection information of a corresponding API interface; further, after the connection information of the API interface saved, sending an API calling request regularly to save data into the database by setting the interval of information sending request, and the data format of the API interface response is unified as JSON data;
if the data source to be created is a database data source, acquiring a corresponding server IP, port, user name and password according to the type of target database; acquiring the authority of the database according to the user name and password, and driving connection to the target database via the server IP and port through a corresponding database; acquiring data from the target database and generating a data source for creating a data model; wherein after connecting to the database, data is previewed and a data source is generated, and data of the database will not be stored in the database.

This embodiment provides a specific application scenario.

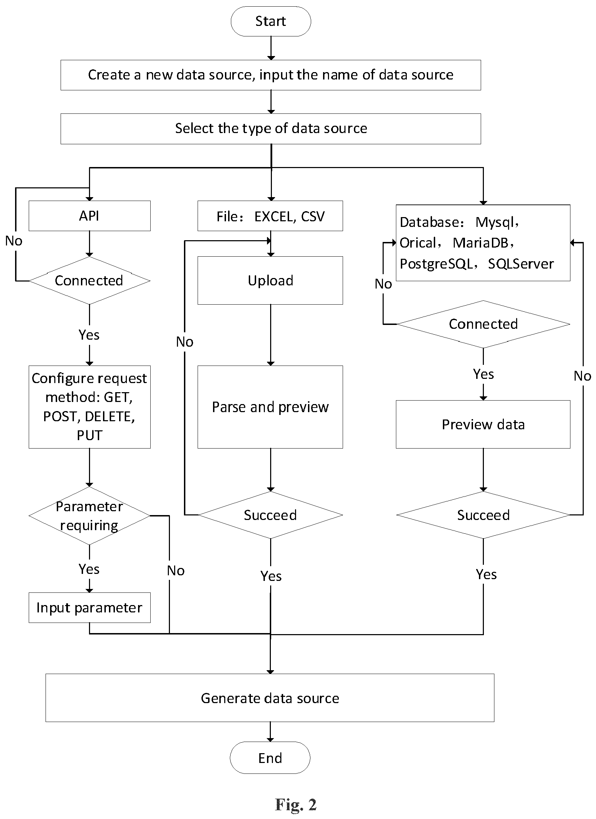

Referring to FIG. 2, according to the requirement for a data model, the user creates a new data source and inputs the name of the data source, and then selects the type of data source to be created.

If the data source to be created is an API data source, it is tested whether the API interface can be connected. After connection, the URL address of a corresponding interface is filled in, and the interface requesting mode such as POST is selected. If corresponding request parameter and request header are needed, corresponding request information is filled in, and then the system sends a connection request. If calling of an API interface fails, the user will be noticed that the calling has failed. If the calling is successful, the connection information will be saved and the data will be saved into the database to generate a data source. When the user needs to acquire API data regularly, by setting the interval of information sending request, an API calling request is sent regularly to save the data into the database.

If the data source to be created is an excel or csv data source, the user uploads a required data file, the system receives the uploaded file and parses it to generate a preview file. After the user confirms it, the file is saved into the database to generate a data source.

If the data source to be created is a database data source, the user selects the type of the database that needs add, and obtains the database authority by setting a server IP, port, user name and password of the corresponding database. Then, connection to the to-be-acquired database is driven through a corresponding database, and if the connection is successful to generate preview data, the database data is obtained to generate a data source.

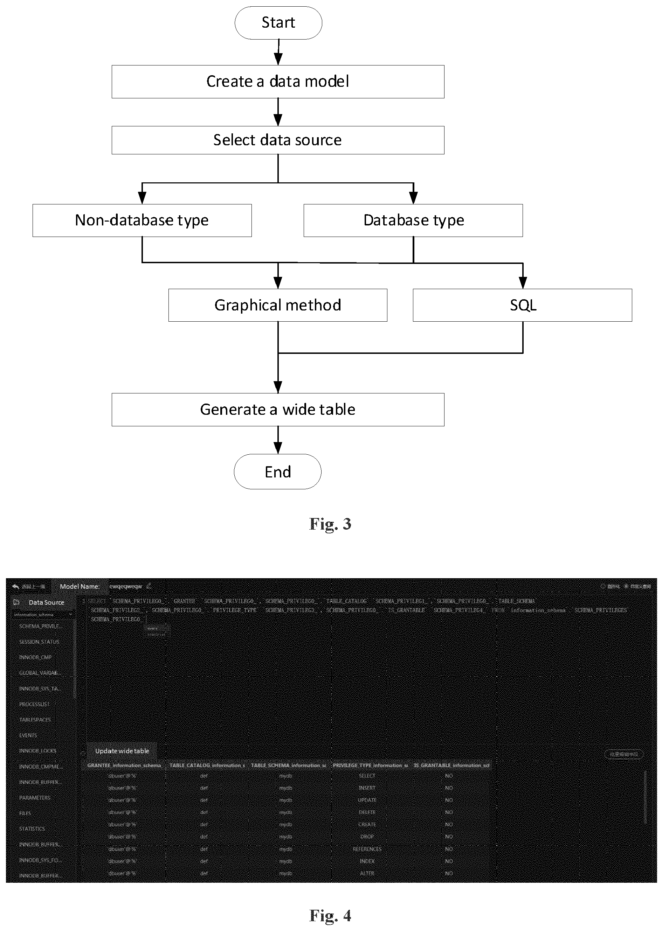

Referring to FIG. 3, generating a corresponding wide table according to the data source and its corresponding type comprises:
receiving a request of data model creation;
determining the data source of a data model to be created and its corresponding type;
generating the corresponding wide table in a corresponding manner according to the type, the manner comprises a graphical manner or an SQL statement manner;
determining whether the type is a database type, and if so, generating a corresponding wide table in a graphical manner or an SQL statement manner; otherwise, generating a corresponding wide table in a graphical manner.

Specifically, said generating a corresponding wide table in a graphical manner comprises:
receiving a drag operation instruction, moving the data source of the data model to be created to a wide table creation region, and generating a corresponding data source table; generating an inter-table data relationship interface in the wide table creation region, and receiving an association relationship supported by the data table set via the inter-table data relationship interface and a correspondence relationship of fields between data tables; generating a corresponding wide table according to the data source table, the association relationship and the correspondence relationship. The supported association relationship includes three connection modes: left connection, right connection and inner connection, wherein the left connection is: returning all the recordings in the left table and recordings with equal connection fields in the right table; the right connection is: returning all the recordings in the right table in and recordings with equal connection fields in the left table; inner connection: only returning rows with equal connection fields in the two tables.

Said generating a corresponding wide table in an SQL manner comprises:
loading the corresponding database driver of the database-type data source; linking to a database where the data source is located through the address saved in the database driver, and acquiring a data table where the data source is located in the database; generating a corresponding wide table according to an SQL statement; verifying whether the data wide table is successfully generated, and if so, saving the SQL statement.

This embodiment provides a specific application scenario.

Referring to FIG. 3, the user enters a data model creation interface and selects a data source to be created.

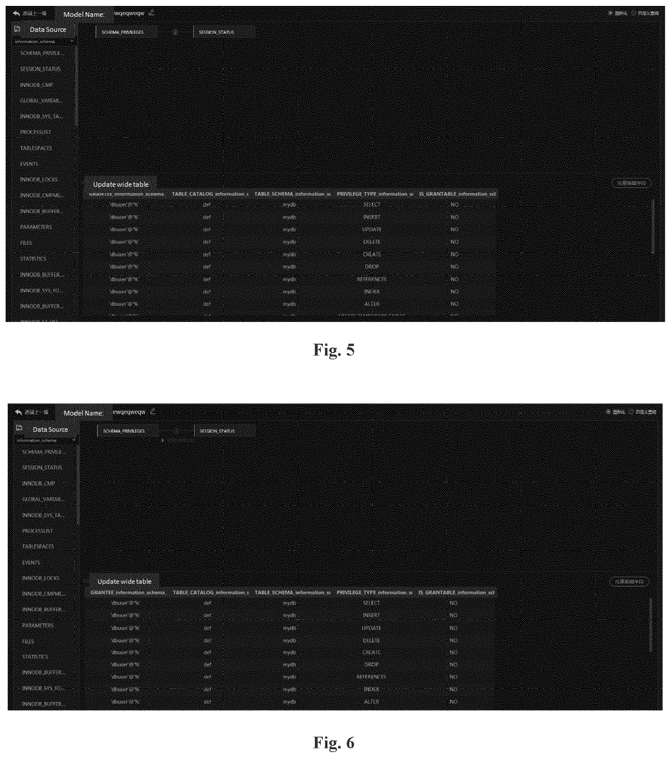

Referring to FIG. 5, if the data source is a non-database type data source, a corresponding wide table is generated in a graphical manner.

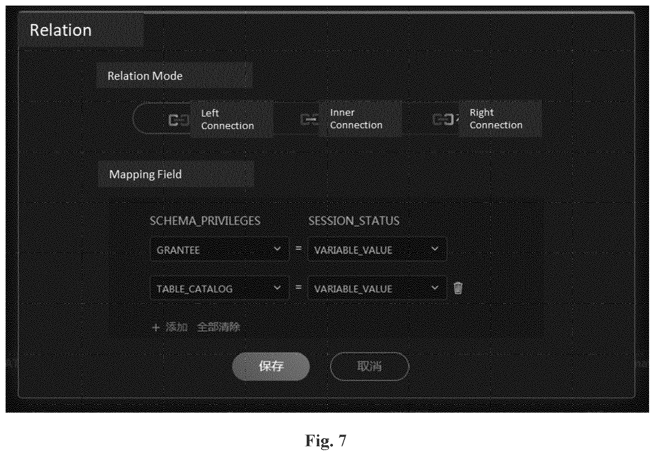

Referring to FIG. 6, specifically, by moving a mouse, a data source of a non-database type that needs to be created in the data source region is dragged to the model creation region, and the user drags the data source table SCHEMA PRIVILEGES and the table SESSION STATUS to the model creation region. When et relationships setting between tables is needed, the system generates a graphical interface as shown in FIG. 7. The user selects association relationships between tables and sets mapping fields in the graphical interface. For example, the corresponding relationships between the above two data sources are: GRANTEE=VARIABLE VALUE and TABLE_CATALOG=VARIABLE_VALUE. After the selection is finished, the system generates a wide table according to the added data source table, the set association relationships and the mapping field relationships. If the created data type is API data, the system directly generates the API data into a wide table.

If the data source is a database type data source, a corresponding wide table is generated in an SQL manner.

Referring to FIG. 4, specifically, a database type data source table to be created is selected by writing SQL statements in the creation region, with declared association relationships between tables and the relationships between fields, the system generates a wide table through the SQL statements written by the user;

When the user is non-professional, the above graphical manner can be applied to generate a wide table from a database type data source table.

### Second Embodiment

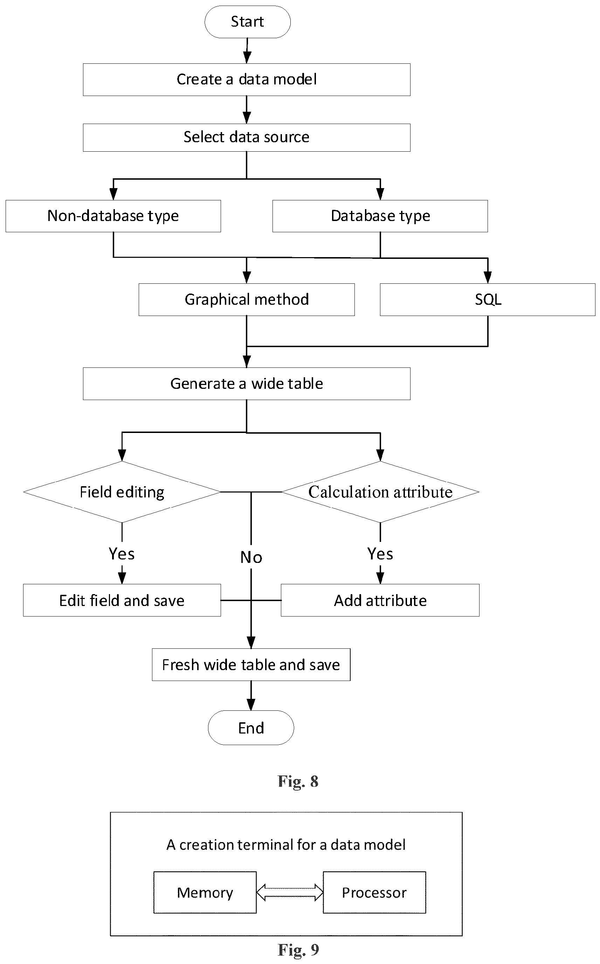

Referring to FIG. 8, this embodiment differs from the first embodiment in further definition about how to update the data model, specifically:
receiving a business modification request, the business modification request comprises the identifier of data model to be modified;
updating a corresponding wide table according to the data model identifier;
the business modification request further comprises a business modification type, the business modification type comprises field editing and calculation attribute adding;
said updating a wide table comprises:
   if the modification type is field editing, saving an edited field in the wide table, refreshing the wide table and saving; if the modification type is calculation attribute adding, adding the calculation attribute to the wide table, refreshing the wide table and saving;
   generating a modified data model according to the updated wide table.

In addition, during the process of using a large visualization screen, the refresh of a model will reload all the charts that use the model data, thus save browser resources.

### Third Embodiment

Referring to FIG. 9, a creation terminal for a data model comprises a memory, a processor, and a computer program that is stored in the memory and can be run on the processor. The steps in the creation method for a data model described in the first embodiment or the second embodiment are implemented when the computer program is executed by the processor.

In summary, according to the creation method and terminal of a data model provided by the present application, the received multiple data sources are processed in a configuration manner corresponding to the data sources, the processed data sources are generated into a corresponding wide table by graphical operating or SQL statements editing, which meet the requirements of different users for data model creation. Using a graphics visualization method, even one without the knowledge of SQL syntax can create the data model and the corresponding wide table. Once created, the data model can be used many times. Moreover, when the business changes and requires field modification or new calculation attribute addition, the business display can be updated by modifying the wide table of the data model, while interface reconfiguration and secondary development are not needed, which improves the experience of using a large screen. Furthermore, during the process of using a large visualization screen, the refresh of a model will reload all the charts that use the model data, thus save browser resources.

What have been stated above are only embodiments of the present application and do not limit the patent scope of the present application. Any equivalent transformations made using contents of the specification and drawings of the present application, or direct or indirect applications in related technical fields, are all included within the scope of patent protection of the present application.

## Claims

1. A creation method for a data model, wherein the method comprises the following steps:
receiving multiple types of data source for data model creation;
generating a corresponding wide table according to the data source and its corresponding type;
generating a corresponding data model according to the wide table.

2. A creation method for a data model according to claim 1, wherein said generating a corresponding wide table according to the data source and its corresponding type comprises:
receiving a request of data model creation;
determining the data source of a data model to be created and its corresponding type;
generating the corresponding wide table in a corresponding manner according to the type, the manner comprising a graphical manner or an SQL statement manner.

3. A creation method for a data model according to claim 2, wherein said generating a corresponding wide table in a corresponding manner according to the type comprises:
determining whether the type is a database type, and if so, generating a corresponding wide table in a graphical manner or an SQL statement manner;
otherwise, generating a corresponding wide table in a graphical manner.

4. The creation method for a data model according to claim 3, wherein said generating a corresponding wide table in a SQL statement manner comprises:
loading database driver to which data source having the database-type corresponds;
linking to a database where the data source is located through the address saved in the database driver, and in the database, acquiring a data table where the data source is located;
generating a corresponding wide table according to an SQL statement and the data table where the data source is located;
verifying whether the wide table is successfully generated, and if so, saving the SQL statement.

5. The creation method for a data model according to claim 3, wherein said generating a corresponding wide table in a graphical manner comprises:
receiving a drag operation instruction, moving the data source of the data model to be created to a wide table creation region, and generating a corresponding data source table;
generating an inter-table data relationship interface in the wide table creation region, and receiving an association relationship supported by the data table set via the inter-table data relationship interface and a correspondence relationship of fields between data tables;
generating a corresponding wide table according to the data source table, the association relationship and the correspondence relationship.

6. A creation method for a data model according to claim 1, wherein the method further comprises the following steps:
receiving a business modification request, the business modification request comprising a data model identifier to be modified;
updating a corresponding wide table according to the data model identifier,
generating a modified data model according to an updated wide table.

7. The creation method for a data model according to claim 6, wherein the business modification request further comprises a business modification type, the business modification type comprises field editing and calculation attribute adding;
said updating a wide table comprises:
if the modification type is field editing, saving an edited field in the wide table, saving the refreshed wide table;
if the modification type is calculation attribute adding, adding the calculation attribute to the wide table, saving the refreshed wide table.

8. The creation method for a data model according to claim 1, wherein said receiving a data source for creating a data model comprises:
receiving a data source creation request, the data source creation request comprising the type of data source to be created;
receiving and generating a corresponding data source for creating a data model according to the type of data source to be created.

9. The creation method for a data model according to claim 8, wherein the type of data source to be created comprises an excel or csv data source, an API data source, or a database data source;
said receiving and generating a corresponding data source for the data model creation according to the type of a data source to be created comprises:
if the type of a data source to be created is an excel or csv data source,
parsing an imported excel or csv file and generating a data source for creating a data model;
if the type of a data source to be created is an API data source,
acquiring a URL address of an interface of the API data source and a requesting mode;
acquiring data from a corresponding interface according to the URL address and the requesting mode, and generating a data source for creating a data model;
if the type of a data source to be created is a database data source,
acquiring a corresponding server IP, port, user name and password according to a type of a to-be-acquired database;
acquiring an authority of the database according to the user name and password, and by means of the corresponding database driver, connecting the target database with the server IP and port;
acquiring data from the to-be-acquired database and generating a data source for the data model creation.

10. A creation terminal for a data model, comprising a memory, a processor, and a computer program that is stored in the memory and can be run on the processor, wherein steps in the creation method for a data model according to any one of claims 1 to 9 is implemented when the computer program is executed by the processor.
